# EUROPÄISCHE PATENTSCHRIFT

(11) **EP 0 981 755 B1**
(45) Veröffentlichungstag und Bekanntmachung des Hinweises auf die Patenterteilung: **13.06.2007**
(21) Anmeldenummer: 98931928.0
(22) Anmeldetag: 16.04.1998
(51) Int. Cl.: G01P 15/125

(54) **BESCHLEUNIGUNGSSENSOR**
ACCELERATION SENSOR
CAPTEUR D'ACCELERATION

(30) Priorität: 10.05.1997 DE 19719779
(43) Veröffentlichungstag der Anmeldung: 01.03.2000
(73) Patentinhaber: ROBERT BOSCH GMBH, 70442 Stuttgart (DE)
(72) Erfinder: LAERMER, Franz, D-70437 Stuttgart (DE); ELSNER, Bernhard, D-70806 Kornwestheim (DE); FREY, Wilhelm, D-70178 Stuttgart (DE)
(86) Internationale Anmeldenummer: PCT/DE1998/001068
(87) Internationale Veröffentlichungsnummer: WO 1998/052051

(56) Entgegenhaltungen:
- DE-A- 4 431 478
- DE-A- 19 503 236

## Beschreibung

Die Erfindung betrifft einen Beschleunigungssensor mit den im Oberbegriff des Anspruchs 1 genannten Merkmalen.

### Stand der Technik

Beschleunigungssensoren der gattungsgemäßen Art sind bekannt. Diese weisen eine an einem Substrat beweglich aufgehängte Schwingstruktur als seismische Masse auf. Infolge einer einwirkenden Beschleunigung wird diese seismische Masse ausgelenkt und verändert ihre relative Position zu dem Substrat. Der seismischen Masse sind Auswertemittel zugeordnet, die den Grad der beschleunigungsbedingten Auslenkung erfassen. Als Auswertemittel sind beispielsweise piezoresistive, kapazitive oder frequenzanaloge Auswerteanordnungen bekannt. Bei den kapazitiven Auswertemitteln ist die seismische Masse mit einer Kammstruktur versehen, die mit einer feststehenden, das heißt mit dem Substrat verbundenen Kammstruktur zusammenwirkt. Zwischen den einzelnen Stegen der Kammstrukturen kommt es zur Ausbildung von Kapazitäten, deren Größen sich mit einer Auslenkung der seismischen Masse verändern. Über Auswerteschaltungen können diese Kapazitätsänderungen erfaßt werden und so eine an dem Beschleunigungssensor einwirkende Beschleunigung detektiert werden. Aus der DE 44 31 478 A1 und der DE 195 03 236 A1 sind derartige Beschleunigungssensoren bekannt.

Bei den bekannten Beschleunigungssensoren ist nachteilig, daß sich in dem Substrat oder den Sensorstrukturen Längenschwankungen, die beispielsweise temperaturabhängig oder von mechanischen Spannungen abhängig sind, auftreten können. Diese rufen geringfügige Veränderungen der Positionen der an dem Substrat aufgehängten seismischen Masse oder der Auswertemittel hervor, die daraufhin eine Signaländerung bewirken. Diese Signaländerungen führen zu einer fehlerhaften Detektion einer angreifenden Beschleunigung beziehungsweise überlagern ein einer angreifenden Beschleunigung proportionales Signal der Auswertemittel mit einem Offsetfehler.

### Vorteile der Erfindung

Der erfindungsgemäße Beschleunigungssensor mit den im Anspruch 1 genannten Merkmalen bietet demgegenüber den Vorteil, daß eine Kompensation von im Substrat oder den Sensorstrukturen auftretenden, temperaturabhängige oder von mechanischen Spannungen abhängige Schwankungen erfolgen kann. Dadurch, daß die Schwingstruktur und/oder die Auswertemittel über mechanische Entkopplungseinrichtungen mit dem Substrat verbunden sind, ist es vorteilhaft möglich, jegliche durch Druck und/oder Zugspannungen sowie Temperaturschwankungen hervorgerufene Materialeffekte im Substrat oder den Sensorstrukturen auszugleichen, so daß diese keinen Einfluß auf den Beschleunigungssensor, insbesondere auf dessen Empfindlichkeit, ausüben. Darüber hinaus können mit den mechanischen Entkopplungseinrichtungen Materialunterschiede zwischen dem Substrat und dem Sensor, beispielsweise bei mittels additiver Verfahren der Oberflächenmikromechanik auf einen Wafer aufgebrachten Beschleunigungssensoren, ausgeglichen werden. So kann ein unterschiedliches Temperaturausdehnungsverhalten von beispielsweise Silizium und metallischen Werkstoffen, wie bei einigen Additivtechniken eingesetzt, kompensiert werden.

Vorteilhafte Ausgestaltungen der Erfindung ergeben sich aus den in den abhängigen Ansprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine Draufsicht auf einen Beschleunigungssensor nach einer ersten Ausführungsvariante;
- Figur 2: eine Draufsicht auf einen Beschleunigungssensor nach einer zweiten Ausführungsvariante und
- Figur 3: eine Draufsicht auf ein Auswertemittel des Beschleunigungssensors.

### Beschreibung der Ausführungsbeispiele

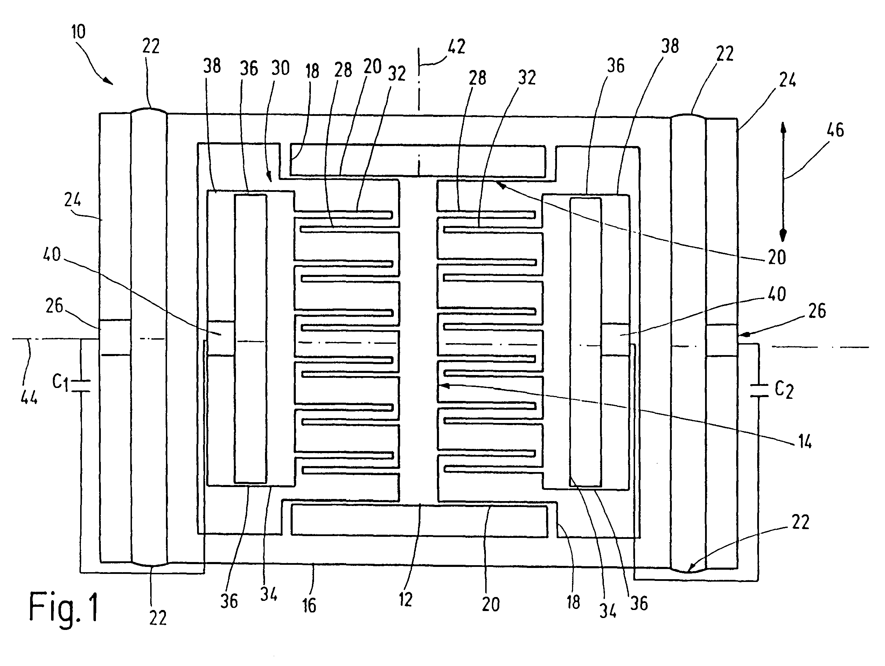

In Figur 1 ist in Draufsicht das Design eines Beschleunigungssensors 10 gezeigt. Der Beschleunigungssensor 10 ist auf einem, im einzelnen nicht dargestellten Substrat, beispielsweise einem Wafer, strukturiert. Die Strukturierung kann mittels bekannter Verfahren der Oberflächenmikromechanik erfolgen. In der gezeigten Darstellung wird der Wafer von der Papierebene gebildet. Der Wafer kann gleichzeitig hier nicht näher zu betrachtende elektrische Auswerteschaltungen für den Beschleunigungssensor 10 aufweisen.

Der Beschleunigungssensor 10 besitzt eine Schwingstruktur 12, die als seismische Masse 14 ausgebildet ist. Die Schwingstruktur 12 ist gegenüber dem Substrat (Wafer) beweglich aufgehängt. Hierzu ist ein Rahmen 16 vorgesehen, von dem nach innengerichtete Vorsprünge 18 entspringen. Die Vorsprünge 18 sind über Federstäbe 20 miteinander verbunden, wobei zwischen den gegenüberliegenden Federstäben 20 die seismische Masse 14 angeordnet ist. Die Federstäbe 20 besitzen in Draufsicht gesehen eine geringe Breite und in die Papierebene hinein betrachtet, eine relativ große Tiefe. Der Rahmen 20 ist über Entkopplungsstege 22 mit Haltestegen 24 verbunden. Die Entkopplungsstege 22 besitzen ebenfalls in Draufsicht gesehen eine relativ geringe Breite und in die Papierebene hinein betrachtet, eine relativ große Tiefe. Die Haltestege 24 sind mittels zentraler Verankerungspunkte 26 auf dem Substrat (Wafer) befestigt. Diese im Verhältnis kleinen Befestigungspunkte 26 tragen die gesamte, ansonsten frei schwebend über dem Substrat angeordnete Anordnung der Haltestege 24, des Rahmens 16, der Schwingstruktur 12 sowie der Federstege 20 beziehungsweise Entkopplungsstege 22. Dies kann mittels bekannter Verfahrensschritte der Herstellung von Oberflächenmikromechanik-Strukturen erfolgen, wobei die freischwingenden Bereiche unterätzt werden, so daß sich zwischen dem Substrat und der Anordnung ein geringfügiger Spalt ergibt.

Die seismische Masse 14 besitzt beidseitig eine Kammstruktur 28, die von senkrecht zur Oberfläche des Wafers angeordneten Plättchen gebildet wird. Die Kammstrukturen 28 sind relativ starr ausgebildet, so daß bei einer Bewegung der seismischen Masse 14 diese mit der seismischen Masse 14 starr mitschwingen.

Der Beschleunigungssensor 10 weist weiterhin Auswertemittel 30 auf, die von feststehenden Kammstrukturen 32 gebildet werden. Die Kammstrukturen 32 entspringen von einem Haltebalken 34, der über Entkopplungsstege 36 mit einem Haltesteg 38 verbunden ist. Der Haltesteg 38 ist über einen Verankerungspunkt 40 mit dem Substrat (Wafer) verbunden. Hier ist auch wiederum nur der Haltesteg 38 im Bereich der Verankerungspunkte 40 mit dem Substrat verbunden, so daß die übrigen Bereiche des Haltestegs 30, die Entkopplungsstege 36, die Haltebalken 34 sowie die Kammstrukturen 32 freitragend angeordnet sind, das heißt, diese besitzen keinen unmittelbaren Berührungskontakt mit dem Substrat.

Die Kammstrukturen 28 und 32 der seismischen Masse 14 beziehungsweise des Auswertemittels 30 kämmen miteinander und bilden ein an sich bekanntes kapazitives Auswertemittel. Durch die Anordnung der Kammstrukturen 32 beziehungsweise 28 ergeben sich zwischen den jeweils benachbarten Stegen der Kammstruktur 28 beziehungsweise 32 Kapazitäten C, wobei -in der Figur 1 in Draufsicht gesehen- links eine Kapazität C1 und rechts eine Kapazität C2 besteht. Die Kapazitäten werden durch den Abstand der Stege der Kammstrukturen 28 und 32 sowie durch die sich gegenüberliegenden Flächen der Stege der Kammstrukturen 28 und 32 bestimmt. Da das gesamte Material des Beschleunigungssensors 10 aus einem elektrisch leitenden Material, beispielsweise Silizium, besteht, können die Kapazitäten über die Verankerungspunkte 26 beziehungsweise 40 in das Substrat und somit in eine nicht näher dargestellte Auswerteschaltung eingebunden werden.

Es ist noch festzuhalten, daß der Beschleunigungssensor 10 in bezug auf eine durch die seismische Masse 14 verlaufende, gedachte Mittellinie 42 symmetrisch angeordnete Entkopplungsstege 22 beziehungsweise Verankerungspunkte 26 beziehungsweise 40 aufweist. Die Kammstrukturen 28 beziehungsweise 32 sind jeweils spiegelbildlich symmetrisch zueinander angeordnet. Die Verankerungspunkte 26 und 40 liegen alle in einer gemeinsamen gedachten Linie 44. Diese Linie 44 ist dabei parallel zu den Kammstrukturen 28, 32.

Es wird so erreicht, daß bei einer Ausdehnung der Kammstrukturen der Abstand der einzelnen Elemente gleich bleibt und sich somit die Kapazität zwischen den Kammstrukturen im wesentlichen nicht ändert. Dadurch wird die Temperaturabhängigkeit noch weiter verringert, da in der Richtung senkrecht zu dieser Linie 44 die Struktur frei expandieren oder kontrahieren kann, also keine thermischen Spannungen induziert werden können. In Verbindung mit den Entkopplungsgliedern werden auch thermische Spannungen entlang dieser Linie relaxiert. Die Materialexpansion senkrecht zu dieser Linie geschieht symmetrisch zu dieser, und zwar identisch für die aufgehangene Masse mit ihren beweglichen und den am Festland auf dieser Linie fixierten Kammstrukturen, die gemeinsam die Auswertemittel des Sensorelements bilden.

Weil sich sowohl "feste" als auch "bewegliche" Kammstrukturen identisch und senkrecht zu dieser Linie ausdehnen, oder relaxieren können, ändern sich die Gapabstände der Auswertemittel nur ~ΔT ε_{Sensormaterial}, was relativ gering ist. Andernfalls hatte man eine Änderung der Gapweite von im Extremfall ~ΔT·(ε_{Sensormaterial}- ε_{Substrat})·l, im Fall eines vollständig am Festland (Substrat) befestigten Kamms, wobei 1 die laterale Ausdehnung der Kammausdehnung ist.

Der in Figur 1 gezeigte Beschleunigungssensor 10 übt folgende Funktion aus:

Bei Einwirkung einer mit dem Doppelpfeil 46 gekennzeichneten Beschleunigung auf den Beschleunigungssensor 10 wird die seismische Masse 14 entsprechend der angreifenden Beschleunigung ausgelenkt. Hierbei wird durch die Ausbildung der Federstäbe 20 die Auslenkung lediglich in Richtung der möglichen Beschleunigungen gemäß dem Doppelpfeil 46 gestattet, da die seismische Masse 14 in dieser Richtung über die Federstäbe 20 weich aufgehängt ist und in hierzu senkrechter Richtung steif aufgehängt ist. Infolge der Auslenkung der seismischen Masse 14 ändern sich die Abstände zwischen den Stegen der Kammstrukturen 28 beziehungsweise 32, so daß es zu einer entsprechenden Variation der Kapazitäten C1 und C2 kommt. Bei einer Auslenkung der seismischen Masse 14 nach oben verringert sich der Abstand der Stege der Kammstrukturen 28 und 32 auf der linken Seite der seismischen Masse, während sich der Abstand der Stege der Kammstrukturen 28 und 32 auf der rechten Seite der seismischen Masse 14 entsprechend vergrößert. Entsprechend verringern beziehungsweise vergrößern sich die Kapazitäten C1 und C2, die über eine entsprechende Auswerteschaltung erfaßbar sind und ein der angreifenden Beschleunigung 46 entsprechendes Signal liefern. Dieses Signal kann beispielsweise zur Auslösung von Rückhaltesystemen in Kraftfahrzeugen ausgenutzt werden.

Durch die Anordnung der Entkopplungsstege 22 und der Anordnung der Verankerungspunkte 26 und 40 auf der Linie 44 wird erreicht, daß unabhängig von einer Einwirkung der Beschleunigung 46 auftretende, temperatur- und/oder materialabhängige Spannungen innerhalb des Substrates nicht auf die seismische Masse 14 oder die Auswertemittel 30 übertragen, sondern frei relaxiert werden können. Die im Substrat auftretenden mechanischen Spannungen und/oder temperaturabhängigen Ausdehnungen werden durch die Entkopplungsstege 22 kompensiert, so daß diese nicht auf den Rahmen 16 und den darin angeordneten seismischen Massen 14 übertragen werden können. Die Entkopplungsstege 22 sind in der Substratebene weich und flexibel, so daß beispielsweise eine Längenänderung des Materials, die auf die Haltestege 24 übertragen wird, ausgeglichen werden kann. Dies wird erreicht, da die Entkopplungsstege 22 in Draufsicht gesehen relativ schmal sind und in die Ebene hinein betrachtet eine relativ große Tiefe aufweisen. Hierdurch sind die Entkopplungsstege 42 in Richtung der Mittellinie 42 relativ weich aufgehängt. Durch die bogenförmige Geometrie der Entkopplungsstege 22 zwischen den Rahmen 16 und den Haltestegen 24 können ebenfalls in Richtung der Linie 44 auftretende Längenänderungen abgefangen werden. Durch die im Verhältnis große Tiefe zur Breite der Entkopplungsstege 22 werden Auslenkungen senkrecht zur Substratebene (senkrecht zur Papierebene in Figur 1) abgefangen, da die Entkopplungsstege 22 in dieser Richtung steif sind. Durch die symmetrische Anordnung der Entkopplungsstege 22 und der Verankerungspunkte 26 beziehungsweise 40 werden auftretende mechanische Spannungen gleichmäßig mit entgegengesetzten Vorzeichen abgefangen, so daß die seismische Masse 14 und die Auswertemittel 30 in ihrer Position verbleiben.

Auch eine Längenänderung der Struktur des Beschleunigungssensors 10 selbst, beispielsweise der Federstäbe 20 und/oder des Rahmens 16 und/oder der seismischen Masse 14 bei einer Temperaturänderung, wobei die Längenänderung sich durch den linearen Ausdehnungskoeffizienten des entsprechenden Materials ergibt, wird durch die Entkopplungsstege 22 und die Anordnung der Verankerungspunkte 26 und 40 in einer Linie kompensiert. Eine Veränderung der Lage der seismischen Masse 14 zu den Auswertemitteln 30 erfolgt hierdurch nicht.

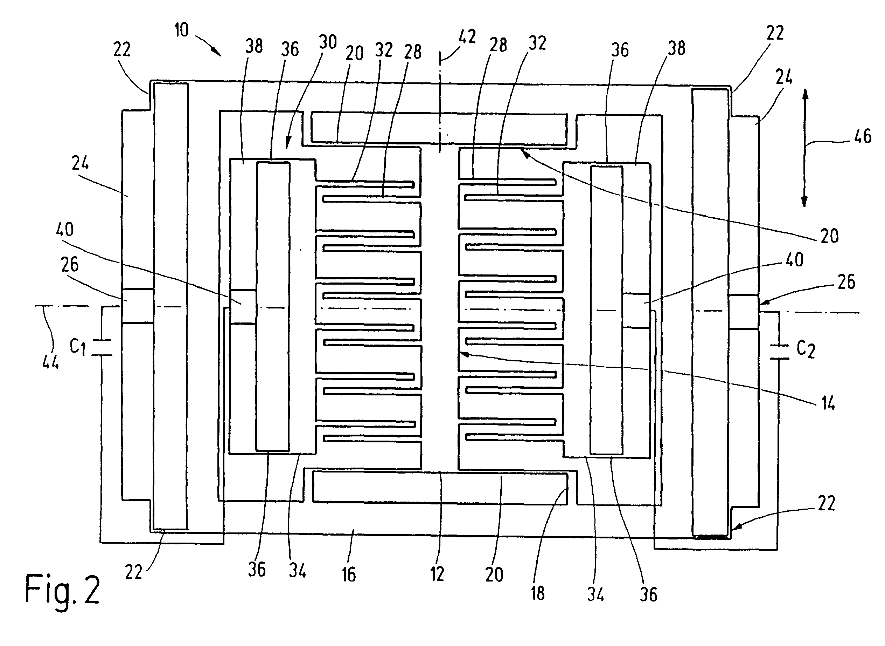

Figur 2 zeigt eine weitere Ausführungsvariante eines Beschleunigungssensors 10. Gleiche Teile wie in Figur 1 sind mit gleichen Bezugszeichen versehen und nicht nochmals erläutert. Bei der Ausführungsvariante in Figur 2 sind die Entkopplungsstege 22 als Winkel ausgebildet. Hierdurch wird ebenfalls erreicht, daß die Entkopplungsstege 22 in Richtung der Mittellinie 42 und in Richtung der Linie 44 weich sind und durch ihre relativ große Tiefe im Verhältnis zu ihrer in Draufsicht gesehenen Breite in die Papierebene hinein steif sind. Somit können auch hier im Substrat oder im Beschleunigungssensor 10 auftretende Längenänderungen infolge von Temperaturveränderungen oder auftretender mechanischer Spannungen kompensiert werden. Die winkelförmige Ausbildung der Entkopplungsstege 22 läßt sich mit bekannten Verfahren der Strukturierung von Oberflächenmikromechanik-Strukturen einfacher erzielen als die in Figur 1 gezeigte bogenförmige Struktur der Entkopplungsstege 22. Die Wirkung der Entkopplungsstege 22 in beiden Fällen ist die gleiche.

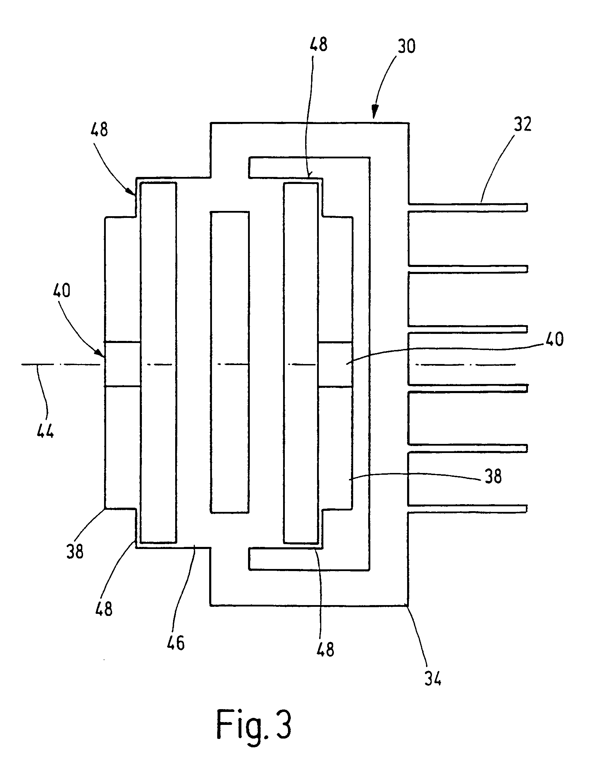

Figur 3 zeigt in einer Detailansicht eine mögliche Ausführungsvariante der Ausbildung der Auswertemittel 30. Hier ist der Haltebalken 34 über einen Rahmen 46 sowie Entkopplungsstege 48 mit Haltestege 38 verbunden. Die Haltestege 38 ihrerseits sind wiederum über die Verankerungspunkte 40 an dem Substrat befestigt.

Durch die in Figur 3 gezeigte Ausführungsvariante wird zusätzlich eine Entkopplung der Auswertemittel 30 von Längenänderungen des Substrats oder des Auswertemittels 30 selber erreicht. Über die symmetrische Anordnung der Entkopplungsstege 48 und die Anordnung der Verankerungspunkte 40 auf der Linie 44 wird auch hier eine verbesserte Entkopplung der Auswertemittel 30 von temperaturbedingten Längenänderungen und mechanischen Spannungen im Material des Substrats erreicht. Die Entkopplungsstege 48 sind wiederum winkelförmig ausgebildet, so daß diese in Richtung der Linie 44 und der Mittellinie 42 (Figur 1) weich sind und senkrecht zum Substrat steif sind.

Insgesamt ist mittels der Entkopplungsstege 22 beziehungsweise 48 und der Anordnung der Verankerungspunkte 26 und 40 auf einer Linie eine vollkommene Temperatur- und Spannungskompensation möglich, so daß jegliche Druck- und Zugspannungen im Sensormaterial, das heißt im Substrat oder im Beschleunigungssensor 10 selber, ausgeglichen werden können und diese somit keinen Einfluß auf das Sensorverhalten, insbesondere einen Offset und eine Empfindlichkeit, haben.

## Patentansprüche

1. Beschleunigungssensor (10) mit einer beweglich an einem Substrat aufgehängten, aufgrund einer Beschleunigungswirkung auslenkbaren Schwingstruktur (12) und Auswertemitteln (30) zum Erfassen einer beschleunigungsbedingten Auslenkung der Schwingstruktur, **dadurch gekennzeichnet, daß** die Schwingstruktur (12) und die Auswertemittel (30) über mechanische Entkopplungseinrichtungen (22, 36, 48) mit dem Substrat verbunden sind.

2. Beschleunigungssensor nach Anspruch 1, **dadurch gekennzeichnet, daß** die Schwingstruktur (12) in einem schwebend aufgehängten Rahmen (16) angeordnet ist, der über Entkopplungsstege (22) mit mit dem Substrat verbundenen Haltestegen (24) verbunden ist.

3. Beschleunigungssensor nach Anspruch 2, **dadurch gekennzeichnet, daß** die Haltestege (24) über jeweils einen symmetrisch angeordneten Verankerungspunkt (26) mit dem Substrat verbunden sind.

4. Beschleunigungssensor nach Anspruch 2 oder 3, **dadurch gekennzeichnet, daß** die Entkopplungsstege (22) bogenförmig zwischen dem Rahmen (16) und den Haltestegen (24) angeordnet sind.

5. Beschleunigungssensor nach Anspruch 2 oder 3, **dadurch gekennzeichnet, daß** die Entkopplungsstege (22) winkelförmig zwischen dem Rahmen (16) und den Haltestegen (24) angeordnet sind.

6. Beschleunigungssensor nach einem der vorhergehen Ansprüche, **dadurch gekennzeichnet, daß** die Auswertemittel (30) über Entkopplungsstege (48) mit dem Substrat verbundene Haltestege (38) verbunden sind.

7. Beschleunigungssensor nach Anspruch 6, **dadurch gekennzeichnet, daß** die Entkopplungsstege (48) winkelförmig zwischen den Auswertemitteln (30) und den Haltestegen (38) angeordnet sind.

8. Beschleunigungssensor nach Anspruch 6 oder 7, **dadurch gekennzeichnet, daß** die Haltestege (38) über jeweils einen symmetrisch angeordneten Verankerungspunkt (40) mit dem Substrat verbunden sind.

9. Beschleunigungssensor nach einem der Ansprüche 6 bis 8, **dadurch gekennzeichnet, daß** die Auswertemittel (30) mit einem Rahmen (46) verbunden sind, der über die Entkopplungsstege (48) mit den Haltestegen (38) verbunden ist.

10. Beschleunigungssensor nach einem der Ansprüche 2 bis 9, **dadurch gekennzeichnet, daß** die Rahmen (16, 46) über jeweils vier symmetrisch angeordnete Entkopplungsstege (22, 48) mit den Haltestegen (24, 38) verbunden sind.

11. Beschleunigungssensor nach einem der Ansprüche 2 bis 10, **dadurch gekennzeichnet, daß** die Entkopplungsstege (22, 48) in parallel zur Substratoberfläche liegende Bewegungseinrichtungen weich und senkrecht zur Substratoberfläche starr sind.

12. Beschleunigungssensor nach einem der Ansprüche 3 oder 8, **dadurch gekennzeichnet, daß** die Verankerungspunkte (26, 40) auf einer gedachten Linie (44) liegen.

13. Beschleunigungssensor nach Anspruch 12, **dadurch gekennzeichnet, daß** Kammstrukturen (28, 32) vorgesehen sind, die aus länglichen, plattenförmigen, parallel zueinander angeordneten Stegen aufgebaut sind und daß die gedachte Linie (44) parallel zu den Stegen angeordnet ist.

## Claims

1. Acceleration sensor (10), having an oscillatory structure (12) which is movably suspended on a substrate and can be deflected owing to an acceleration effect, and evaluation means (30) for sensing an acceleration-determined deflection of the oscillatory structure, **characterized in that** the oscillatory structure (12) and the evaluation means (30) are connected to the substrate by means of mechanical decoupling devices (22, 36, 48).

2. Acceleration sensor according to Claim 1, **characterized in that** the oscillatory structure (12) is arranged in a frame (16) which is suspended in a floating fashion and is connected via decoupling webs (22) to securing webs (24) which are connected to the substrate.

3. Acceleration sensor according to Claim 2, **characterized in that** the securing webs (24) are connected to the substrate via in each case one symmetrically arranged anchoring point (26).

4. Acceleration sensor according to Claim 2 or 3, **characterized in that** the decoupling webs (22) are arranged in a bow shape between the frame (16) and the securing webs (24).

5. Acceleration sensor according to Claim 2 or 3, **characterized in that** the decoupling webs (22) are arranged in an angular shape between the frame (16) and the securing webs (24).

6. Acceleration sensor according to one of the preceding claims, **characterized in that** the evaluation means (30) are connected via decoupling webs (48) to securing webs (38) which are connected to the substrate.

7. Acceleration sensor according to Claim 6, **characterized in that** the decoupling webs (48) are arranged in an angular shape between the evaluation means (30) and the securing webs (38).

8. Acceleration sensor according to Claim 6 or 7, **characterized in that** the securing webs (38) are connected to the substrate via in each case one symmetrically arranged anchoring point (40).

9. Acceleration sensor according to one of Claims 6 to 8, **characterized in that** the evaluation means (30) are connected to a frame (46) which is connected via the decoupling webs (48) to the securing webs (38).

10. Acceleration sensor according to one of Claims 2 to 9, **characterized in that** the frames (16, 46) are connected to the securing webs (24, 38) via in each case four symmetrically arranged decoupling webs (22, 48).

11. Acceleration sensor according to one of Claims 2 to 10, **characterized in that** the decoupling webs (22, 48) are soft in movement directions parallel to the substrate surface and rigid perpendicularly to the substrate surface.

12. Acceleration sensor according to one of Claims 3 or 8, **characterized in that** the anchoring points (26, 40) lie on an imaginary line (44).

13. Acceleration sensor according to Claim 12, **characterized in that** comb structures (28, 32) are provided which are built up of elongated, plate-shaped webs which are arranged parallel to one another, and **in that** the imaginary line (44) is arranged parallel to the webs.

## Revendications

1. Capteur d'accélération (10) comportant une structure oscillante (12) suspendue de manière mobile sur un substrat et pouvant dévier sous l'effet d'une accélération, ainsi que des moyens d'exploitation (30) permettant de saisir une déviation de la structure oscillante à la suite d'une accélération,
**caractérisé en ce que**
la structure oscillante (12) et les moyens d'exploitation (30) sont reliés au substrat par des dispositifs mécaniques de découplage (22, 36, 38).

2. Capteur d'accélération selon la revendication 1,
**caractérisé en ce que**
la structure oscillante (12) est disposée dans un cadre (16) suspendu de manière flottante et relié par des barrettes de découplage (22) aux barres de maintien (24) raccordées au substrat.

3. Capteur d'accélération selon la revendication 2,
**caractérisé en ce que**
les barres de maintien (24) sont chacune reliées au substrat par un point d'ancrage (26) symétrique.

4. Capteur d'accélération selon la revendication 2 ou 3,
**caractérisé en ce que**
les barrettes de découplage (22) forment un arc entre le cadre (16) et les barres de maintien (24).

5. Capteur d'accélération selon la revendication 2 ou 3,
**caractérisé en ce que**
les barrettes de découplage (22) forment un angle entre le cadre (16) et les barres de maintien (24).

6. Capteur d'accélération selon l'une des revendications précédentes,
**caractérisé en ce que**
les moyens d'exploitation (30) sont reliés par des barrettes de découplage (48) à des barres de maintien (38) raccordées au substrat.

7. Capteur d'accélération selon la revendication 6,
**caractérisé en ce que**
les barrettes de découplage (48) forment un angle entre les moyens d'exploitation (30) et les barrettes de maintien (38).

8. Capteur d'accélération selon la revendication 6 ou 7,
**caractérisé en ce que**
les barrettes de maintien (38) sont chacune reliées au substrat par un point d'ancrage (40) symétrique.

9. Capteur d'accélération selon l'une des revendications 6 à 8,
**caractérisé en ce que**
les moyens d'exploitation (30) sont reliés à un cadre (46) raccordé aux barrettes de maintien (38) par des barrettes de découplage (48).

10. Capteur d'accélération selon l'une des revendications 2 à 9,
**caractérisé en ce que**
les cadres (16, 46) sont chacun reliés aux barrettes de maintien (24, 38) par quatre barrettes de découplage (22, 48) symétriques.

11. Capteur d'accélération selon l'une des revendications 2 à 10,
**caractérisé en ce que**
les barrettes de découplage (22, 48) sont souples dans des directions de déplacement parallèles à la surface du substrat et sont rigides dans des directions perpendiculaires à la surface du substrat.

12. Capteur d'accélération selon l'une des revendications 8 ou 9,
**caractérisé en ce que**
les points d'ancrage (26, 40) se situent sur une ligne imaginaire (44).

13. Capteur d'accélération selon la revendication 12,
**caractérisé en ce que**
des structures en peigne (28, 32) se composent de barrettes allongées, plates et parallèles, et la ligne imaginaire (44) est parallèle à ces barrettes.
